# FASCICULE DE BREVET EUROPEEN

(11) **EP 1 219 881 B1**
(45) Date de publication et mention de la délivrance du brevet: **16.11.2005**
(21) Numéro de dépôt: 01403344.3
(22) Date de dépôt: 21.12.2001
(51) Int. Cl.: F16L 5/06

(54) **Elément à fixer en aveugle sur une paroi**
Auf einer Wand blind befestigtes Element
Element blind fastened to a wall

(30) Priorité: 29.12.2000 FR 0017302
(43) Date de publication de la demande: 03.07.2002
(73) Titulaire: LEGRAND, 87000 Limoges (FR); LEGRAND SNC, 87000 Limoges (FR)
(72) Inventeur: Cornu, Hervé, 76770 Houppeville (FR)
(74) Mandataire: Santarelli

(56) Documents cités:
- EP-A- 0 206 896
- DE-C- 4 128 632
- FR-A- 2 590 959
- GB-A- 2 065 812
- US-A- 3 667 783
- US-A- 4 145 075
- US-A- 4 891 470

## Description

L'invention concerne un élément à fixer en aveugle sur une paroi.

On connaît déjà un tel élément muni :
- d'un pied fileté à enfoncer au travers d'un orifice traversant pratiqué dans ladite paroi, ledit pied comprenant :
   - un fût présentant une extrémité libre ; et
   - des dents flexibles qui, en l'absence de sollicitation, adoptent une position de repos dans laquelle elles saillent radialement du fût, et sont aptes à se rétracter élastiquement à partir de cette position de repos, lesdites dents présentant une surface d'appui radiale tournée du côté opposé à ladite extrémité libre ;
- d'une tête apte à être vissée sur le pied, ladite tête présentant une surface de butée qui, lorsque la tête est vissée sur le pied, est tournée vers la surface d'appui desdites dents.

Un tel élément peut être appliqué notamment à la fixation murale d'un système d'accrochage, à la fixation de voyants ou de boutons de commande sur des tableaux d'affichage ou de commande, ou encore à la traversée étanche d'une paroi par un câble, l'élément étant dans ce dernier cas, communément appelé un « presse-étoupe ».

La fixation de l'élément à la paroi consiste à enfoncer le pied dans l'orifice, puis à visser la tête sur le pied jusqu'à ce que la paroi se trouve pincée entre la surface d'appui des dents et la surface de butée de la tête.

La majorité des éléments connus de ce type présente un certain nombre d'inconvénients.

En effet, lors du vissage de la tête sur le pied, la tête a souvent tendance à entraîner par frottement le pied dans sa rotation.

Il est alors nécessaire de tenir d'une main le pied, tandis que de l'autre main on visse la tête, l'emploi simultané des deux mains étant donc requis.

Dans certains cas, l'emploi des deux mains est difficile, voire impossible, par exemple lorsque l'accès à la paroi dans laquelle est pratiqué l'orifice est malaisé.

Le document DE-A-41 28 632 prévoit dans la circonférence de l'orifice des saillies ou des empreintes qui viennent en prise avec des empreintes, respectivement des saillies sur le pied dans la zone des dents, pour obtenir un arrêt en rotation de l'élément sur la paroi.

On comprend que l'orifice et le pied présentent en section des formes crénelées complémentaires, ce qui nécessite, au moins pour la réalisation de l'orifice dans la paroi, l'emploi d'un outil de forme spécifique et dont le diamètre doit être choisi en fonction du diamètre du pied.

L'invention vise à pallier notamment les inconvénients précités, en proposant un élément à fixer en aveugle sur une paroi qui soit à la fois pratique et simple d'utilisation.

A cet effet, et selon un premier aspect, l'invention propose un élément du type précité, caractérisé en ce qu'il comprend en outre un organe élastiquement compressible fixé à demeure au fût et le recouvrant au moins en partie au voisinage des dents du côté opposé à l'extrémité libre du fût, ledit organe étant apte à être comprimé sous l'effet d'une force radiale.

Lorsque le pied est enfoncé dans l'orifice, l'organe élastique, comprimé entre le fût et la tranche du trou, constitue un frein à la rotation du pied lors du vissage de la tête, la fixation de l'élément pouvant ainsi être réalisé d'une main.

Selon un mode de réalisation, ledit organe compressible se présente sous la forme d'un bourrelet annulaire réalisé dans un matériau élastomère entourant le fût, en étant surmoulé autour de celui-ci.

L'organe compressible peut recouvrir au moins en partie la surface d'appui desdites dents.

L'élément peut en outre comprendre un deuxième organe compressible qui s'étend radialement autour dudit fût, et présentant :
- une première surface d'appui qui, lorsque la tête est vissée sur le pied, regarde la surface de butée de la tête ; et
- une deuxième surface d'appui qui regarde la surface d'appui des dents.

Selon un mode de réalisation, le premier et le deuxième organes compressibles forment un ensemble monobloc, le deuxième organe compressible se présentant sous la forme d'une collerette venue de matière avec le premier organe compressible, ladite collerette étant située à distance des dents, de sorte qu'un espace libre est ménagé entre la deuxième surface d'appui de la collerette et les surfaces d'appui des dents, l'ensemble monobloc présentant une section en forme de cornière.

Selon un autre mode de réalisation, le deuxième organe compressible se présente sous la forme d'une rondelle apte à être emmanchée sur le fût.

De préférence, le pied comprend un épaulement situé à distance des dents du côté opposé à la première extrémité libre, cet épaulement présentant une surface radiale formant butée, qui regarde les surfaces d'appui des dents, de sorte qu'un espace est ménagé entre les dents et ledit épaulement, le premier organe compressible étant situé dans l'espace formé entre lesdites dents et ledit épaulement.

En outre, le pied peut comprendre une partie filetée s'étendant depuis ledit épaulement vers une deuxième extrémité libre, opposée à la première.

Selon d'autres caractéristiques :
- le pied est creux, et présente un trou traversant, sensiblement cylindrique, s'étendant d'une extrémité à l'autre ;
- le pied comporte en outre une membrane souple, élastique, de forme tronconique, et comprenant :
   - une première extrémité fixée à la deuxième extrémité du pied et définissant une première embouchure ; et
   - une deuxième extrémité, libre, définissant une deuxième embouchure tournée vers la première extrémité du fût,
   cette membrane s'étendant, entre ses deux embouchures, au travers d'au moins une partie dudit trou traversant ;

Cette membrane peut être surmoulée dans le pied et réalisée dans un matériau élastomère, par exemple le même matériau que ledit organe compressible.

Selon un mode de réalisation, la tête est une pièce cylindrique comportant :
- un alésage fileté au moins en partie ;
- une première extrémité définissant une première ouverture sensiblement circulaire, et formant ladite surface de butée ; et
- une deuxième extrémité opposée à la première, définissant une deuxième ouverture sensiblement circulaire.

Par exemple, la tête comprend en outre une membrane souple, élastique, fixée à la deuxième extrémité de la tête, et formant un opercule déchirable obturant la deuxième ouverture.

De préférence cet opercule, est de forme circulaire, et présente au voisinage de son centre une zone de moindre résistance dont l'enfoncement est apte à provoquer le déchirement de l'opercule.

Selon des caractéristiques :
- l'opercule est réalisé dans un matériau élastomère ;
- l'opercule est réalisé dans le même matériau que ledit organe compressible ;
- l'opercule est surmoulé sur la tête.

Selon un mode de réalisation, l'élément comprend en outre un insert emmanché et fixé dans l'alésage de la tête, ledit insert et la tête étant coaxiaux, ledit insert comprenant :
- une partie annulaire ; et
- une pluralité de lamelles élastiques comportant chacune :
   - une première partie saillant axialement de ladite partie annulaire en direction de la deuxième ouverture ; et
   - une deuxième partie, recourbée vers la première ouverture et vers l'axe de l'insert, et se prolongeant en une extrémité libre formant une pointe ;
les pointes définissant ensemble un espace libre entourant l'axe de l'insert.

Par exemple, la tête comprend :
- à distance de sa première extrémité, au moins une saillie radiale intérieure ;
- à distance de ladite saillie, au moins une butée ;
ledit insert étant encliqueté dans la tête et emprisonné entre ladite saillie et ladite butée.

Selon d'autres caractéristiques :
- la tête présente une partie filetée s'étendant entre la première extrémité et ladite saillie, ladite partie filetée présente un filetage interrompu, et comprend une pluralité de secteurs filetés séparés par des secteurs non filetés ; la partie filetée peut également présenter un filetage double, et comprendre deux filets imbriqués ;
- la tête comprend une série de bourrelets extérieurs s'étendant axialement,
lesdits bourrelets étant par exemple venus de matière avec l'opercule précité.

Selon un mode de réalisation, l'élément comprend des moyens d'encliquetage de la tête sur le pied. Ces moyens d'encliquetage comportent par exemple, d'une part, des dents appartenant à la tête, et d'autre part, des griffes appartenant au pied, lesdites griffes étant aptes à coopérer avec lesdites dents.

Selon un deuxième aspect, l'invention propose un dispositif d'entrée de câble pour la traversée d'une paroi par un câble au travers d'un orifice traversant pratiqué dans ladite paroi, ce dispositif se présentant sous la forme d'un élément tel que décrit ci-dessus, le pied et la tête étant creux pour permettre leur traversée par le câble.

D'autres objets et avantages de l'invention apparaîtront au cours de la description qui va suivre de modes préférés de réalisation de l'invention, description faite, à titre illustratif mais non limitatif, en référence aux dessins annexés dans lesquels :
- la figure 1 est une vue d'élévation en coupe d'un dispositif d'entrée de câble conforme à l'invention, à fixer en aveugle sur une paroi, et qui comporte deux organes élastiquement compressibles formant un ensemble monobloc à section en forme de cornière ; sur cette figure, le dispositif est dans une position intermédiaire où le pied est enfoncé dans la paroi sans que le dispositif ne soit fixé à celle-ci, la tête n'étant pas complètement vissée sur le pied ;
- la figure 2 est une vue d'élévation en plan du pied du dispositif de la figure 1 ;
- la figure 3 est une vue en perspective en coupe partielle du pied de la figure 2 ;
- la figure 4 est une vue similaire à la figure 1, dans laquelle le dispositif est fixé sur la paroi après que la tête a été vissée à fond sur le pied ;
- la figure 5 est une vue similaire à la figure 4, dans laquelle la paroi présente une épaisseur supérieure à celle de la paroi de la figure 4 ;
- la figure 6 est une vue similaire à la figure 1 et aux figures 4 et 5, selon une variante de réalisation où la tête comprend des organes complémentaires de préhension sous la forme de bourrelets extérieurs ;
- la figure 7 est une vue d'élévation en plan de la tête du dispositif de la figure 6 ;
- la figure 8 est une vue en plan de dessus de la tête de la figure 7 ;
- la figure 9 est une vue similaire aux figures 4 à 6, selon une variante de réalisation où le dispositif comprend deux organes élastiquement compressibles dissociés ;
- la figure 10 est une vue d'élévation en demi - coupe du pied d'un élément conforme à l'invention, selon une variante de réalisation ; et
- la figure 11 est une vue d'élévation en coupe d'un élément conforme à l'invention, selon une autre variante de réalisation.

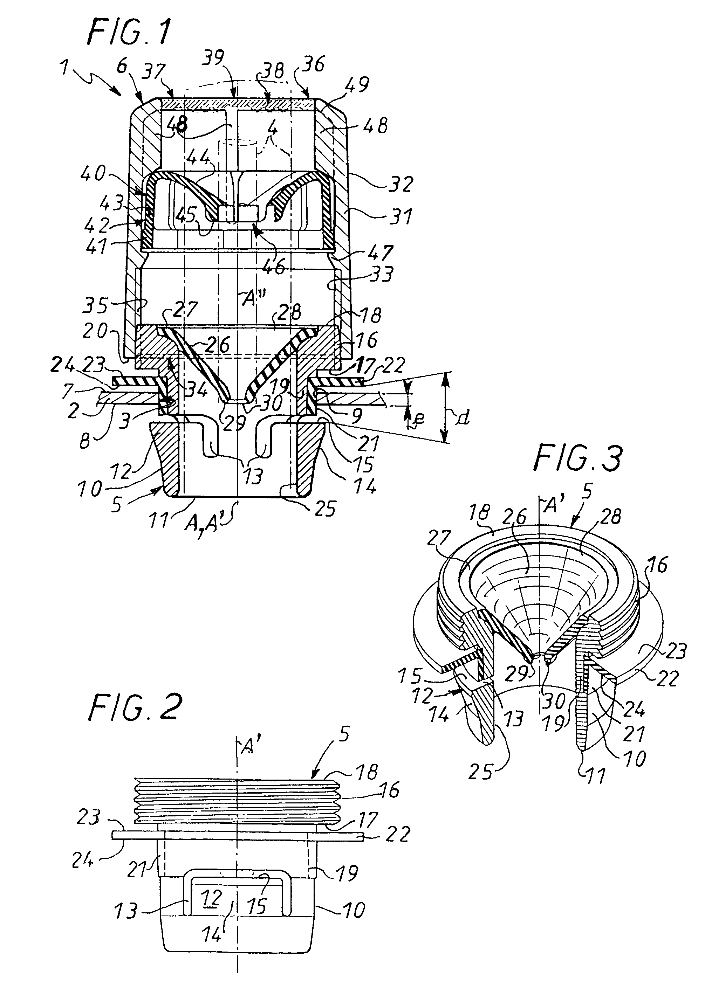

Sur les figures 1, 4, 5 est représenté un élément 1 adapté à être fixé en aveugle sur une paroi 2 en y étant enfoncé au travers d'un orifice 3 traversant pratiqué dans cette paroi 2.

Cet élément 1 est ici un dispositif d'entrée de câble apte à permettre le passage étanche d'un câble 4 au travers de la paroi 2 par l'orifice 3, ce dispositif étant également appelé presse-étoupe.

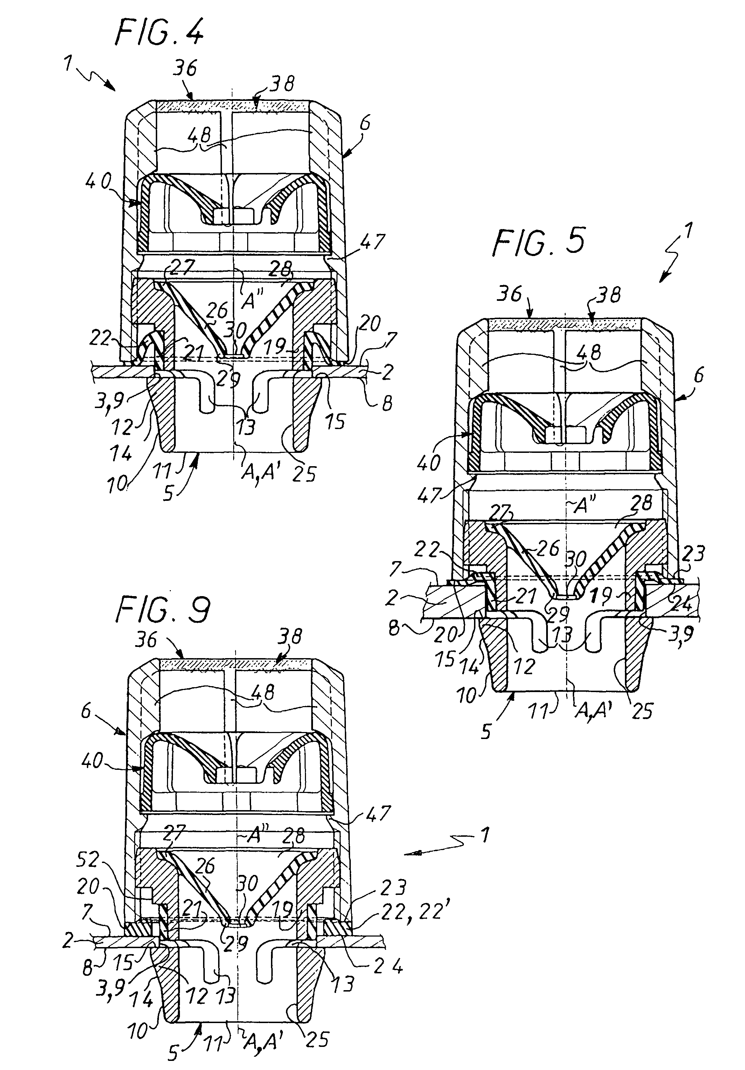

Le dispositif 1 comprend un pied 5 fileté, creux, apte à être enfoncé dans la paroi 2 pour y être encliqueté, ainsi qu'une tête 6 filetée creuse, apte à être vissée sur le pied 5 pour assurer la fixation du dispositif 1 sur la paroi 2 par pincement de la paroi 2 entre le pied 5 et la tête 6, tel que représenté sur les figures 4 et 5.

Le pied 5 et la tête 6 sont des pièces relativement rigides, réalisées ici dans un matériau plastique tel que polypropylène ou PVC.

La paroi 2 présente une première face 7 sensiblement plane, ainsi qu'une deuxième face 8 opposée à la première 7 et sensiblement parallèle à celle-ci.

L'orifice 3, qui est de section circulaire d'axe A, présente quant à lui une tranche 9 cylindrique qui relie les faces 7, 8.

On note e l'épaisseur de la paroi 2, c'est-à-dire la distance séparant la première face 7 de la deuxième face 8, ou encore la dimension longitudinale de la tranche 9 de l'orifice 3.

Le pied 5 présente globalement une symétrie de révolution d'axe A' qui, lorsque le pied 5 est enfoncé dans l'orifice 3, est sensiblement confondu avec l'axe A de ce dernier.

Le pied 5 comprend un fût 10 de forme sensiblement cylindrique présentant une extrémité libre 11 formant une première extrémité libre du pied 5 et qui, lorsque le pied 5 est enfoncé dans l'orifice 3, se trouve du côté de la deuxième face 8 de la paroi 2.

Le pied 5 comprend en outre des dents 12 flexibles qui, en l'absence de sollicitation, adoptent une position de repos (figure 1) dans laquelle elles saillent radialement du fût 10, et sont aptes à se rétracter élastiquement à partir de cette position de repos pour assurer l'encliquetage du pied 5 dans l'orifice 3.

Tel qu'il apparaît sur les figures 1 et 2, le pied 5 comprend deux dents 12 symétriques l'une de l'autre par rapport à l'axe A', chaque dent étant venue de matière avec le fût 10, et délimitée par une encoche 13 en forme de U pratiquée dans le fût 10.

Les dents 12 présentent une surface extérieure 14 inclinée et tournée vers l'extrémité libre 11, ainsi qu'une surface d'appui 15 radiale tournée du côté opposé à l'extrémité libre 11.

Le pied 5 se prolonge, du côté opposé à son extrémité libre 11, à une certaine distance axiale des dents, par une partie d'extrémité 16 filetée présentant un diamètre extérieur supérieur à celui du fût 10, de sorte que le pied 5 a sensiblement la forme d'un T selon une vue d'élévation en plan (figure 2).

La partie d'extrémité filetée 16 s'étend entre d'une part, au droit de sa jonction avec le fût 10, un épaulement formant une surface radiale annulaire de butée 17 qui regarde les surfaces d'appui 15 des dents 12, et une extrémité 18 formant une deuxième extrémité libre du pied 5, opposée à la première 11.

En outre, le fût 10 comprend, dans l'espace ménagé entre les surfaces d'appui 15 des dents 12 et l'épaulement 17, une partie 19 cylindrique formant une partie centrale du pied 5.

Naturellement, les dimensions extérieures du pied 5, à savoir notamment ses diamètres extérieurs aux niveaux de sa première extrémité libre 11, de la surface d'appui 15 des dents 12, de sa partie centrale 19 et de sa partie d'extrémité 16, ainsi que la dimension longitudinale de la partie centrale 19, sont choisies pour que le pied 5 puisse être enfoncé dans l'orifice 3 de sorte à pouvoir y être encliqueté sans difficulté.

Ainsi, lorsque le pied 5 est enfoncé dans l'orifice 3, les dents 12 viennent en contact avec sa tranche 9 par l'intermédiaire de leurs surfaces extérieures 14, et sont forcées à se rétracter radialement.

Et, après avoir traversé la paroi 2, les dents 12 reprennent, sous l'effet de leur élasticité propre, leur position de repos, leur surface d'appui 15 se trouvant alors en regard de la deuxième face 8 de la paroi 2.

La paroi 2 se trouve alors prise en sandwich entre les dents 12 et la partie d'extrémité 16, la tranche 9 de l'orifice étant située en regard de la partie centrale 19, tel que représenté sur la figure 1.

Bien entendu, la partie centrale 19 présente à cet effet une dimension longitudinale supérieure à l'épaisseur e de la paroi 2.

Sur la figure 1, le dispositif 1 est représenté dans une position dite intermédiaire où, bien qu'étant encliqueté dans l'orifice 3, le pied 5 se trouve relativement libre par rapport à la paroi 2 en translation longitudinale.

La fixation du dispositif 1 sur la paroi 2 est obtenue, après l'enfoncement et l'encliquetage du pied 5 dans l'orifice 3 du côté de son extrémité libre 11, par vissage à fond de la tête 6 sur le pied 5.

La tête 6 présente une première extrémité 20 formant une surface radiale annulaire de butée qui, lorsque la tête 6 est vissée sur le pied 5, est tournée vers les surfaces d'appui 15 des dents 12.

Le vissage à fond de la tête 6 sur le pied 5 depuis la position intermédiaire provoque le rapprochement de la surface de butée 20 et des surfaces d'appui 15 jusqu'à une position dite de fixation, illustrée sur les figures 4 et 5, dans laquelle la paroi 2 se trouve pincée entre la surface de butée 20 et la surface d'appui 15.

Afin d'éviter que lors du vissage de la tête 6 sur le pied 5, elle n'entraîne celui-ci en rotation autour de son axe A', l'on souhaite immobiliser en rotation le pied 5 par rapport à la paroi 2.

A cet effet, le pied 5 comprend une ceinture 21 qui entoure le fût 10 au voisinage des dents 12 du côté opposé à la première extrémité libre 11 en recouvrant la partie centrale 19.

Cette ceinture 21 est un organe élastiquement compressible, apte à être comprimé sous l'effet d'une force radiale dirigée depuis l'extérieur vers l'intérieur, et à se dilater, en l'absence de contrainte, sous l'effet de son élasticité propre.

La ceinture 21 est réalisée dans un matériau élastomère, et est fixée à demeure au fût 10 en étant surmoulée autour de celui-ci pour former autour de lui un bourrelet annulaire présentant une surface extérieure sensiblement cylindrique.

Ici, le matériau dans lequel est réalisée la ceinture 21 est choisi parmi les élastomères thermoplastiques présentant les caractéristiques suivantes :
- dureté comprise entre 35 et 45 shore A, mesurée suivant la méthode ASTM D 2240 ;
- déformation permanente sous pression comprise entre 15 % et 16 %, mesurée suivant la méthode B de l'ASTM D 395, à 23°C.

La géométrie de la ceinture 21, notamment son extension radiale, est choisie pour que, après que le pied 5 a été enfoncé au travers de l'orifice 3, la ceinture 21 soit en prise avec la tranche 9 de l'orifice 3, et se trouve comprimée entre ladite tranche 9 et la partie centrale 19 du pied 5.

Il en résulte, entre la ceinture 21 et la tranche 9 de l'orifice 3, une force de frottement qui s'oppose à la libre rotation du pied 5 dans la paroi 2 et qui permet le vissage de la tête 6 sans qu'il soit nécessaire de tenir le pied 5.

En comblant l'espace entre la partie centrale 19 et la tranche 9 de l'orifice 3, la ceinture 21 réalise aussi l'étanchéité de la liaison entre le pied 5 et la paroi 2.

Le dispositif 1 comprend en outre un deuxième organe compressible 22 sous la forme d'une jupe annulaire ou collerette qui s'étend radialement autour du fût 10.

La collerette 22 est venue de matière avec la ceinture 21 pour former avec elle un ensemble monobloc à section en forme de cornière, tel qu'il apparaît sur les figures 1 à 5.

La collerette 22 se trouve à proximité de l'épaulement 17 et à distance des dents 12, et présente une première surface radiale d'appui 23 tournée vers l'épaulement 17 - surface qui, lorsque la tête 6 est fixée sur le pied 5, regarde la surface de butée 20 -, ainsi qu'une deuxième surface radiale d'appui 24 opposée à la première 23, qui regarde la surface d'appui 11 des dents 12.

Ainsi est ménagé, entre la deuxième surface d'appui 24 et les surfaces d'appui 15 des dents 12, un espace libre qui présente, en l'absence de contrainte axiale sur la collerette 22, une dimension axiale d choisie pour être supérieure à l'épaisseur e de la paroi 2.

De la sorte, le dispositif 1 est adapté à différentes épaisseurs de paroi, tel qu'il apparaît sur les figures 4 et 5, la paroi 2 étant en fait prise en sandwich entre les dents 12 et la collerette 22.

La collerette 22 est apte à être comprimée sous l'effet d'une force axiale ; elle est prévue pour être comprimée entre la tête 6 et la paroi 2 de sorte que, lorsque le dispositif 1 est en position de fixation sur la paroi 2, la première et la deuxième surfaces d'appui 23, 24 sont respectivement en appui contre la surface de butée 20 de la tête 6 et première face 7 de la paroi 2 (figures 4 et 5).

Ainsi comprimée, la collerette 22 assure, premièrement, l'étanchéité de la liaison entre la tête 6 et la paroi 2. Elle assure, deuxièmement, un frein au dévissage de la tête 6, en agissant sur celle-ci à la manière d'un contre-écrou.

En effet, la collerette 22 exerce sur la tête 6, d'une part, une force de frottement par l'intermédiaire de sa première surface d'appui 23 contre la surface de butée 20, et d'autre part, sous l'effet de son élasticité propre, une force normale à la première face 7 de la paroi 2, force qui tend à éloigner la tête 6 de la paroi 2 et à bloquer les filets respectifs de la tête 6 et du pied 5.

Par ailleurs, lorsqu'elle se trouve comprimée entre la tête 6 et la paroi 2, la collerette 22 exerce, par l'intermédiaire de sa deuxième surface d'appui 24, une force de frottement sur la première face 7 de la paroi 2. La collerette 22 constitue de ce fait un frein complémentaire à la libre rotation du pied 5 par rapport à la paroi 2.

Afin de permettre le passage du câble 4, le pied 5 présente un trou traversant 25, sensiblement cylindrique, qui s'étend depuis la première extrémité 11 jusqu'à la deuxième extrémité 18.

Et, afin de rendre étanche la liaison du pied 5 au câble 4, le pied 5 comprend en outre une membrane souple 26, élastique, de forme tronconique d'axe A'.

La membrane 26 comprend d'une part une première extrémité 27, fixée à la deuxième extrémité 18 du pied 5, et qui définit une première embouchure 28 par laquelle le câble 4 peut être introduit dans le pied 5 au travers du trou traversant 25.

La membrane 26 comprend d'autre part une deuxième extrémité 29, libre, qui définit une deuxième embouchure 30, tournée vers la première extrémité 11 du pied 5.

La membrane 26 s'étend, entre ses deux embouchures 28, 30, au travers d'une partie au moins du trou 25, tel qu'il apparaît sur les figures 1 et 2, 4 et 5.

Le diamètre intérieur de la deuxième embouchure 30 est choisi inférieur au diamètre extérieur du câble 4, de sorte que, lorsque le câble 4 est introduit dans le trou 25, la deuxième embouchure 30 se distend pour épouser la surface extérieure du câble 4, remplissant ainsi sa fonction d'étanchéité.

La membrane 26 est ici réalisée dans le même matériau que la ceinture 21 et la collerette 22 ; elle est surmoulée sur le pied en même temps qu'elles.

L'on décrit à présent la tête 6.

Tel qu'il apparaît sur les figures 1, 4, 5, la tête 6 se présente sous la forme d'un capuchon comprenant une jupe 31 sensiblement cylindrique d'axe A" qui, lorsque la tête 6 est vissée sur le pied 5, est sensiblement confondu avec l'axe A' de celui-ci.

La jupe 31 présente une surface extérieure 32, ainsi qu'une surface intérieure 33 formant dans la tête 6 un alésage traversant.

L'alésage 33 s'étend depuis l'extrémité libre 20, qui forme une première ouverture circulaire 34, à proximité de laquelle l'alésage présente une partie filetée 35, jusqu'à une deuxième extrémité libre 36, opposée à la première 20.

Cette deuxième extrémité 36 définit une deuxième ouverture 37 essentiellement circulaire, d'un diamètre suffisant pour permettre le passage du câble 4.

Est fixée à la deuxième extrémité 36 une membrane souple 38 élastique formant un opercule déchirable qui obture la deuxième ouverture 37.

Cet opercule 38, de forme circulaire, présente au voisinage de son centre une zone de moindre résistance 39 dont l'enfoncement, notamment lors de l'introduction du câble 4, est apte à provoquer le déchirement de l'opercule 38.

L'opercule 38 est ici surmoulé sur la tête 6 ; il est réalisé dans le même matériau que la membrane 26.

Afin d'assurer le maintien du câble 4 dans la tête 6, celle-ci comprend en outre un insert 40 emmanché et fixé dans l'alésage 33, coaxial avec la tête 6.

Cet insert 40 comprend une partie annulaire 41 ainsi qu'une pluralité de lamelles élastiques 42 formant crochet, réparties en étoile, et comportant chacune une première partie 43 saillant axialement de la partie annulaire 41 en direction de la deuxième ouverture 37 de la tête 6, ainsi qu'une deuxième partie 44, radiale, recourbée vers l'intérieur et vers la première ouverture 20.

Chaque partie radiale 44 se prolonge en une extrémité libre 45 formant une pointe apte à venir en prise avec la surface extérieure du câble 4 pour empêcher son retrait de la tête 6, les extrémités libres 45 définissant ensemble autour de l'axe de l'insert 40, un espace libre 46 suffisant pour permettre le passage du câble 4.

Afin d'assurer le maintien de l'insert 40 dans la tête 6, celle-ci comprend, d'une part, à distance de sa première extrémité 20, un bourrelet annulaire 47 saillant de la surface intérieure 33, et d'autre part, des ailettes 48 saillant de la surface intérieure 33 à proximité de la deuxième ouverture 37.

La tête 6 présente, à sa deuxième extrémité libre 36, une paroi de fond radiale annulaire 49 définissant la deuxième ouverture 37, les ailettes s'étendant axialement jusqu'à cette paroi de fond 49.

L'insert 40 est encliqueté dans la tête 6 en étant emprisonné entre le bourrelet 47 et les ailettes 48.

Ainsi, le câble 4 peut être introduit sans difficulté dans la tête en forçant les parties radiales 44 des lamelles 42 à ployer vers l'extérieur. Par contre, les lamelles 42 empêchent le retrait intempestif du câble 4 en mordant sa surface extérieure.

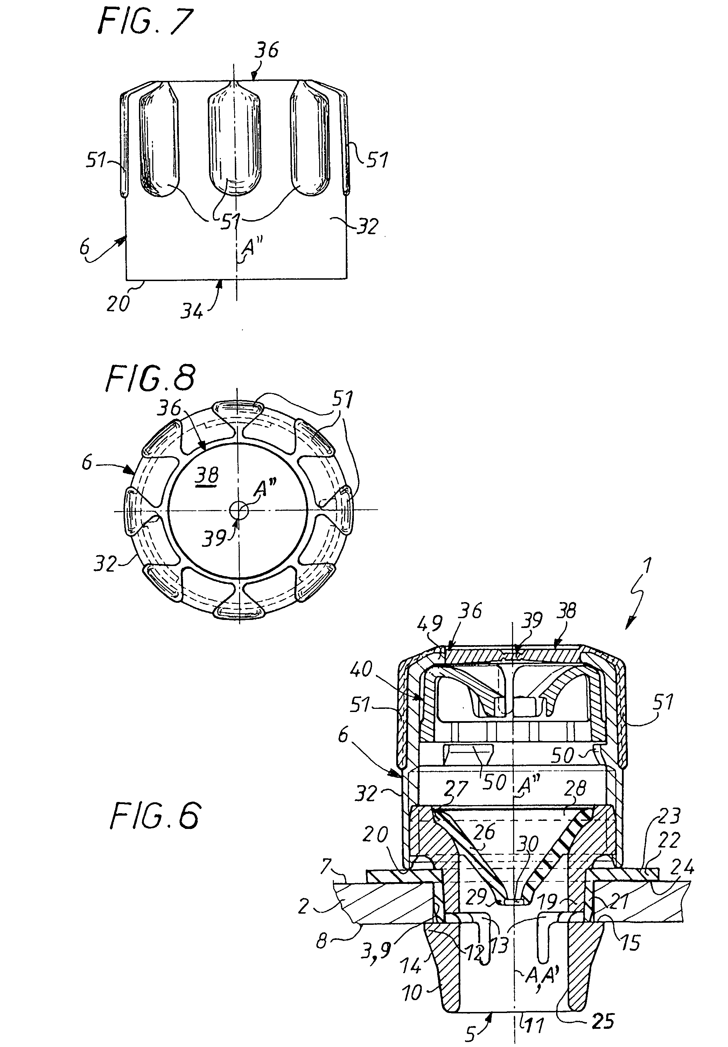

Une première variante de réalisation est illustrée sur la figure 6. Cette première variante se distingue de ce qui précède en ce que la tête 6 est dépourvue d'ailettes, et, au lieu du bourrelet 47 précité, comprend des dents 50 d'encliquetage saillant radialement de la surface intérieure 33. L'insert 40 est encliqueté entre ces dents 50 et la paroi de fond 49.

Sur les figures 6 à 8 est illustrée une deuxième variante de réalisation, selon laquelle la tête 6 comporte des moyens complémentaires de préhension visant à faciliter la prise en main de la tête 6 et à augmenter le couple de serrage qui peut lui être appliqué lors de son vissage sur le pied 5.

Ces moyens complémentaires de préhension se présentent sous la forme d'une série de bourrelets extérieurs 51 s'étendant axialement sur la surface extérieure 32 de la tête 6.

Afin de simplifier la fabrication de la tête, ces bourrelets 51 sont surmoulés sur la tête 6 simultanément à l'opercule 38 avec lequel ils sont venus de matière.

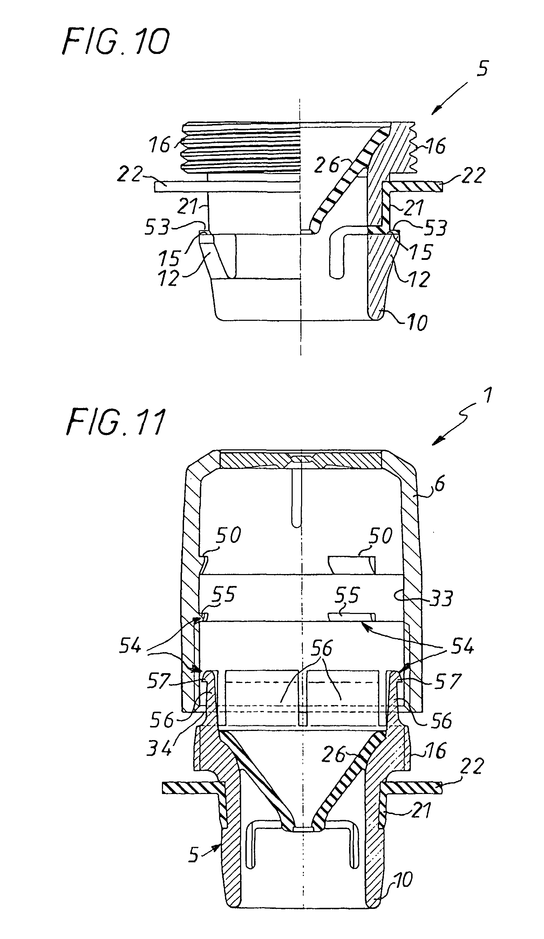

Une troisième variante de réalisation est illustrée sur la figure 9.

Cette variante se distingue de ce qui précède en ce que le deuxième organe compressible 22 se présente sous la forme d'une rondelle 22' et non d'une collerette, cette rondelle 22' étant emmanchée sur le fût 10, tout en étant dissociée de celui-ci.

A cet effet, le fût 10 comprend, entre la partie centrale 19 et l'épaulement 17, un épaulement 52 apte à recevoir la rondelle 22' lors de son emmanchement.

Cette rondelle 22' exerce les mêmes fonctions que la collerette précédemment décrite, excepté le freinage ou le blocage en rotation du pied 5.

Selon une quatrième variante, illustrée sur la figure 6, la ceinture 21 présente une surface extérieure de forme tronconique, de sorte à pouvoir s'adapter à des orifices dont les diamètres sont légèrement différents, et ainsi permettre une certaine tolérance lors de la réalisation de l'orifice 3.

Selon une cinquième variante, illustrée sur la figure 10, la ceinture 21 présente une partie 53 qui recouvre au moins en partie la surface d'appui 15 des dents 12. Lorsque le pied 5 est encliqueté dans la paroi 2, et la tête 6 vissée sur le pied 5 de sorte que l'élément 1 se trouve en position de fixation, la partie 53 se trouve en position de fixation, la partie 53 se trouve comprimée entre la surface d'appui 15 et la deuxième surface d'appui 24 de la paroi 2.

La partie 53 a une double fonction. D'une part, elle forme un frein complémentaire à la libre rotation du pied 5 dans l'orifice 3 en exerçant une force de frottement contre la deuxième surface d'appui 24.

D'autre part, elle contribue, par son élasticité propre, à maintenir une tension entre le pied 5 et la tête 6 au niveau de leurs parties filetées respectives 16, 35, tension qui freine la libre rotation de la tête 6 sur le pied 5.

Selon une sixième variante, illustrée sur la figure 11, l'élément 1 comprend en outre des moyens d'encliquetage 54 de la tête 6 sur le pied 5 lorsqu'elle est suffisamment vissée sur celui-ci.

Ces moyens d'encliquetage 54 comprennent d'une part des dents 55 saillant radialement de la surface intérieure 33 de la tête 6, situées à distance des dents 50 d'encliquetage de l'insert 40, du côté de la première ouverture 34.

Les moyens d'encliquetage 54 comprennent d'autre part des griffes 56 saillant longitudinalement du pied 5 du côté opposé au fût 10.

Les griffes 56 présentent chacune une extrémité libre 57 recourbée vers l'extérieur.

Les griffes 56 sont susceptibles de fléchir vers l'intérieur lorsque, lors du vissage de la tête 6 sur le pied 5, leurs extrémités libres 57 rencontrent les dents 55.

Lorsque les extrémités libres 57 se trouvent au-delà des dents 55 vers l'intérieur de la tête, les griffes 56 s'épanouissent vers l'extérieur, le pied 5 et la tête 6 se trouvant encliquetés de manière irréversible de sorte qu'ils sont alors inséparables.

Dans une variante non illustrée, la tête présente un filetage interrompu, la partie filetée de la tête se composant de plusieurs secteurs angulaires filetés uniformément répartis sur la circonférence de la surface intérieure, ces secteurs filetés étant séparés par des secteurs non filetés.

Dans une autre variante non illustrée, la partie filetée de la tête présente un filetage double, et comprend deux filets imbriqués, ce qui permet une plus grande rapidité de serrage et évite un serrage excessif de la tête sur le pied lors de son vissage.

Bien entendu, on peut prévoir par ailleurs que le pied comprenne un nombre de dents supérieur à deux.

Les dimensions et les matériaux dans lesquels sont réalisés la ceinture 21, la collerette 22 ou la rondelle 22' peuvent bien entendu être différents de ceux donnés plus haut à titre d'exemple.

En particulier, l'homme du métier pourra choisir pour la ceinture 21 un matériau plus ou moins compressible, et un diamètre extérieur plus ou moins important, selon qu'il veuille freiner ou empêcher la rotation du pied 5 dans l'orifice 3.

Bien entendu, il est possible de combiner entre elles les variantes qui viennent d'être exposées, sans sortir du cadre de l'invention.

Par ailleurs, l'invention ne se limite pas à un dispositif d'entrée de câble tel que décrit ci-dessus.

Notamment, un tel élément peut constituer un dispositif visant à permettre l'assemblage de deux pièces distinctes comprenant chacune une paroi percée d'un orifice. On met en oeuvre un tel élément en introduisant son pied au travers des deux orifices disposés en regard, et en serrant ensuite la tête sur le pied pour réaliser le pincement conjoint des deux parois entre les dents du pied et la tête.

Un tel élément peut également constituer un support pour un câble que l'on souhaite faire courir le long d'une paroi, la tête présentant par exemple des moyens d'accrochage du câble.

Il peut également porter, sur sa tête, un bouton de commande ou un voyant lumineux dont on souhaite disposer sur un tableau de commande ou d'affichage.

## Revendications

1. Elément à fixer en aveugle sur une paroi (2), muni :
- d'un pied fileté (5) à enfoncer au travers d'un orifice (3) traversant pratiqué dans ladite paroi (2), ledit pied (5) comprenant :
- un fût (10) présentant une première et une deuxième extrémités libres (11, 18) opposées ; et
- des dents flexibles (12) qui, en l'absence de sollicitation, adoptent une position de repos dans laquelle elles saillent radialement du fût, et sont aptes à se rétracter élastiquement à partir de cette position de repos, lesdites dents (12) présentant une surface d'appui (15) radiale tournée du côté opposé à ladite extrémité libre (11) ;
- d'une tête (6) apte à être vissée sur le pied (5), ladite tête (6) présentant une surface de butée (20) qui, lorsque la tête (6) est vissée sur le pied (5), est tournée vers la surface d'appui (15) desdites dents (12) ;
ledit élément (1) étant **caractérisé en ce qu'**il comprend en outre un organe élastiquement compressible (21) fixé à demeure au fût (10) et le recouvrant au moins en partie au voisinage des dents (12) du côté opposé à l'extrémité libre (11) du fût (10), ledit organe (21) étant apte à être comprimé sous l'effet d'une force radiale.

2. Elément selon la revendication 1, **caractérisé en ce que** ledit organe compressible (21) se présente sous la forme d'un bourrelet annulaire entourant le fût (10).

3. Elément selon la revendication 1 ou la revendication 2, **caractérisé en ce que** ledit organe compressible (21) est surmoulé autour du fût (10).

4. Elément selon l'une des revendications 1 à 3, **caractérisé en ce que** ledit organe (21) est réalisé dans un matériau élastomère.

5. Elément selon l'une des revendications 1 à 4, **caractérisé en ce qu'**il comprend en outre un deuxième organe compressible (22) qui s'étend radialement autour dudit fût (10), et présentant :
- une première surface d'appui (23) qui, lorsque la tête (6) est vissée sur le pied (5), regarde la surface de butée (20) de la tête (6) ; et
- une deuxième surface d'appui (24) qui regarde la surface d'appui (15) des dents (12).

6. Elément selon la revendication 5, **caractérisé en ce que** le premier et le deuxième organes compressibles (21, 22) forment un ensemble monobloc.

7. Elément selon la revendication 6, **caractérisé en ce que** le deuxième organe compressible (22) se présente sous la forme d'une collerette venue de matière avec le premier organe compressible (21), ladite collerette (22) étant située à distance des dents (12), de sorte qu'un espace libre est ménagé entre la deuxième surface d'appui (24) de la collerette (22) et les surfaces d'appui (15) des dents (12).

8. Elément selon la revendication 7, **caractérisé en ce que** ledit ensemble monobloc présente une section en forme de cornière.

9. Elément selon la revendication 5, **caractérisé en ce que** le deuxième organe compressible (22) se présente sous la forme d'une rondelle (22') apte à être emmanchée sur le fût (10).

10. Elément selon l'une des revendications 1 à 9, **caractérisé en ce que** le pied (5) comprend un épaulement (17) situé à distance des dents (12) du côté opposé à la première extrémité libre (11), cet épaulement (17) formant une surface radiale formant butée, qui regarde les surfaces d'appui (15) des dents (12), de sorte qu'un espace est ménagé entre les dents (12) et ledit épaulement (17).

11. Elément selon la revendication 10, **caractérisé en ce que** le premier organe compressible (21) est situé dans l'espace formé entre lesdites dents (12) et ledit épaulement (17).

12. Elément selon la revendication 10 ou la revendication 11, **caractérisé en ce que** le pied (5) comprend une partie filetée (16) s'étendant depuis ledit épaulement (17) vers la deuxième extrémité libre (18).

13. Elément selon l'une des revendications 1 à 12, **caractérisé en ce que** le pied (5) est creux, et présente un trou (25) traversant, sensiblement cylindrique, s'étendant d'une extrémité (11) à l'autre (18).

14. Elément selon la revendication 13, **caractérisé en ce qu'**il comprend en outre une membrane souple (26), élastique, de forme tronconique, et comprenant :
- une première extrémité (27) fixée à la deuxième extrémité (18) du pied (5) et définissant une première embouchure (28) ; et
- une deuxième extrémité (29), libre, définissant une deuxième embouchure (30) tournée vers la première extrémité (11) du fût (10),
cette membrane (26) s'étendant, entre ses deux embouchures (28, 30), au travers d'au moins une partie dudit trou (25) traversant.

15. Elément selon la revendication 14, **caractérisé en ce que** ladite membrane (26) est réalisée dans un matériau élastomère.

16. Elément selon la revendication 14 ou la revendication 15, **caractérisé en ce que** ladite membrane (26) est réalisée dans le même matériau que ledit organe compressible (21).

17. Elément selon l'une des revendications 14 à 16, **caractérisé en ce que** ladite membrane (26) est surmoulée dans le pied (5).

18. Elément selon l'une des revendications 1 à 17, **caractérisé en ce que** la tête (6) est une pièce cylindrique comportant :
- un alésage (33) fileté au moins en partie ;
- une première extrémité (20) définissant une première ouverture (34) sensiblement circulaire, et formant ladite surface de butée (20) ; et
- une deuxième extrémité (36) opposée à la première (20), définissant une deuxième ouverture (37) sensiblement circulaire.

19. Elément selon la revendication 18, **caractérisé en ce que** la tête (6) comprend en outre une membrane souple (38), élastique, fixée à la deuxième extrémité (36) de la tête (6), et formant un opercule déchirable obturant la deuxième ouverture (37).

20. Elément selon la revendication 19, **caractérisé en ce que** ledit opercule (38), de forme circulaire, présente au voisinage de son centre une zone de moindre résistance (39) dont l'enfoncement est apte à provoquer le déchirement de l'opercule (38).

21. Elément selon la revendication 19 ou la revendication 20, **caractérisé en ce que** ledit opercule (38) est réalisé dans un matériau élastomère.

22. Elément selon l'une des revendications 19 à 21, **caractérisé en ce que** ledit opercule (38) est réalisé dans le même matériau que ledit organe compressible (21).

23. Elément selon l'une des revendications 19 à 22, **caractérisé en ce que** ledit opercule (38) est surmoulé sur la tête (6).

24. Elément selon l'une des revendications 18 à 23, **caractérisé en ce qu'**il comprend en outre un insert (40) emmanché et fixé dans l'alésage (33) de la tête (6), ledit insert (40) et la tête (6) étant coaxiaux, ledit insert (40) comprenant :
- une partie annulaire (41) ; et
- une pluralité de lamelles élastiques (42) comportant chacune :
- une première partie (43) saillant axialement de ladite partie annulaire (41) en direction de la deuxième ouverture (37) ; et
- une deuxième partie (44), recourbée vers la première ouverture (34) et vers l'axe de l'insert (40), et se prolongeant en une extrémité libre formant une pointe (45) ;
les pointes (45) définissant ensemble un espace libre (46) entourant l'axe de l'insert (40).

25. Elément selon la revendication 24, **caractérisé en ce que** la tête (6) comprend en outre :
- à distance de sa première extrémité (20), au moins une saillie radiale (47, 50) intérieure ;
- à distance de ladite saillie (47, 50), au moins une butée (48, 52) ;
ledit insert (40) étant encliqueté dans la tête (6) et emprisonné entre ladite saillie (47, 50) et ladite butée (48, 52).

26. Elément selon la revendication 25, **caractérisé en ce que** la tête (6) présente une partie filetée (35) s'étendant entre la première extrémité (20) et ladite saillie (47, 50).

27. Elément selon la revendication 26, **caractérisé en ce que** ladite partie filetée (35) présente un filetage interrompu, et comprend une pluralité de secteurs filetés séparés par des secteurs non filetés.

28. Elément selon la revendication 26, **caractérisé en ce que** ladite partie filetée (35) présente un filetage double, et comprend deux filets imbriqués.

29. Elément selon l'une des revendications 1 à 28, **caractérisé en ce que** la tête (6) comprend une série de bourrelets extérieurs (51) s'étendant axialement.

30. Elément selon l'une des revendications 19 à 23, **caractérisé en ce que** la tête (6) comprend une série de bourrelets extérieurs (51) s'étendant axialement, lesdits bourrelets (51) étant venus de matière avec ledit opercule (38).

31. Elément selon l'une des revendications 1 à 30, **caractérisé en ce que** l'organe élastiquement compressible (21) recouvre au moins en partie ladite surface d'appui (15).

32. Elément selon l'une des revendications 1 à 31, **caractérisé en ce qu'**il comprend des moyens d'encliquetage (54) de la tête (6) sur le pied (5).

33. Elément selon la revendication 32, **caractérisé en ce que** lesdites moyens d'encliquetage (54) comprennent d'une part des dents (55) appartenant à la tête (6), d'autre part des griffes (56) appartenant au pied (5), lesdites griffes (56) étant aptes à coopérer avec lesdites dents (55).

34. Dispositif d'entrée de câble pour la traversée d'une paroi (2) par un câble (4) au travers d'un orifice (3) traversant pratiqué dans ladite paroi (2), ledit dispositif (1) étant **caractérisé en ce qu'**il se présente sous la forme d'un élément selon l'une des revendications 1 à 33, le pied (5) et la tête (6) étant creux pour permettre leur traversée par le câble (4).

## Patentansprüche

1. Blind an einer Wand (2) zu befestigendes Element, welches versehen ist mit:
- einem mit einem Gewinde versehenen Fuß (5) zum Eintreiben in diese Wand (2) durch eine darin ausgebildete diese querende Öffnung (3), wobei dieser Fuß (5) umfasst:
- einen Schaft (10), der einander entgegengesetzt ein erstes und ein zweites freies Ende (11, 18) aufweist; und
- biegsame Zähne (12), welche in Abwesenheit einer Belastung eine Ruheposition annehmen, in der sie radial vom Schaft vorstehen, und die fähig sind, sich von dieser Ruheposition aus elastisch einzuziehen, wobei die Zähne (12) auf der dem freien Ende (11) abgewandten Seite eine umlaufende Abstützfläche (15) aufweisen;
- einem Kopf (6), welcher geeignet ist, auf den Fuß (5) geschraubt zu werden, wobei der Kopf (6) eine Anschlagfläche (20) aufweist, die, wenn der Kopf (6) auf den Fuß (5) geschraubt ist, auf die Abstützfläche (15) der Zähne (12) gerichtet ist;
**dadurch gekennzeichnet, dass** das Element (1) zudem ein elastisch kompressibles Organ (21) aufweist, welches dauerhaft an dem Schaft (10) befestigt ist und diesen wenigstens teilweise in der Umgebung der Zähne (12) auf der dem freien Ende (11) des Schaftes (10) entgegengesetzten Seite bedeckt, wobei dieses Organ (21) geeignet ist, unter dem Einfluss einer radialen Kraft komprimiert zu werden.

2. Element nach Anspruch 1, **dadurch gekennzeichnet, dass** das kompressible Organ (21) in der Form eines ringförmiges Wulstes vorliegt, der den Schaft (10) umgibt.

3. Element nach Anspruch 1 oder 2, **dadurch gekennzeichnet, dass** das kompressible Organ (21) um den Schaft (10) herum angegossen ist.

4. Element nach einem der Ansprüche 1 bis 3, **dadurch gekennzeichnet, dass** das Organ (21) aus einem elastomeren Material ausgebildet ist.

5. Element nach einem der Ansprüche 1 bis 4, **dadurch gekennzeichnet, dass** es des Weiteren ein zweites kompressibles Organ (22) umfasst, welches sich radial um den Schaft (10) erstreckt, wobei es aufweist:
- eine erste Abstützfläche (23), welche, wenn der Kopf (6) auf den Fuß (5) geschraubt ist, in Richtung der Anschlagfläche (20) des Kopfes (6) weist; und
- eine zweite Abstützfläche (24), welche in Richtung der Abstützfläche (15) der Zähne (12) weist.

6. Element nach Anspruch 5, **dadurch gekennzeichnet, dass** das erste und das zweite kompressible Organ (21, 22) eine einstückige Gesamtheit bilden.

7. Element nach Anspruch 6, **dadurch gekennzeichnet, dass** das zweite kompressible Organ (22) in Form eines Kragens vorliegt, der mit dem ersten kompressiblen Organ (21) aus einem Stück besteht, wobei der Kragen (22) von den Zähnen (12) so beabstandet ist, dass ein freier Raum zwischen der zweiten Abstützfläche (24) des Kragens (22) und den Abstützflächen (15) der Zähne (12) ausgespart ist.

8. Element nach Anspruch 7, **dadurch gekennzeichnet, dass** die einstückig ausgebildete Gesamtheit einen Querschnitt in Form eines Winkelprofils aufweist.

9. Element nach Anspruch 5, **dadurch gekennzeichnet, dass** das zweite kompressible Organ (22) in Form einer Scheibe (22') vorliegt, welche geeignet ist, auf den Schaft (10) aufgesteckt zu werden.

10. Element nach einem der Ansprüche 1 bis 9, **dadurch gekennzeichnet, dass** der Fuß (5) eine Schulter (17) umfasst, welche von den Zähnen (12) beabstandet auf der dem ersten freien Ende (11) entgegengesetzten Seite angeordnet ist, wobei diese Schulter (17) eine radiale, einen Anschlag bildende Oberfläche bildet, die zu der Abstützfläche (15) der Zähne (12) weist, so dass ein Raum zwischen den Zähnen (12) und der Schulter (17) ausgespart ist.

11. Element nach Anspruch 10, **dadurch gekennzeichnet, dass** das erste kompressible Organ (21) in dem zwischen den Zähnen (12) und der Schulter (17) gebildeten Raum angeordnet ist.

12. Element nach Anspruch 10 oder Anspruch 11, **dadurch gekennzeichnet, dass** der Fuß (5) einen mit einem Gewinde versehenen Bereich (16) umfasst, der sich von der Schulter (17) in Richtung des zweiten freien Endes (18) erstreckt.

13. Element nach einem der Ansprüche 1 bis 12, **dadurch gekennzeichnet, dass** der Fuß (5) hohl ist und ein ihn durchquerendes Loch (25) aufweist, welches im Wesentlichen zylindrisch ist und sich von einem Ende (11) zum anderen (18) erstreckt.

14. Element nach Anspruch 13, **dadurch gekennzeichnet, dass** es zudem eine nachgiebige elastische Membran (26) in kegelstumpfartiger Form umfasst, welche umfasst:
- ein erstes Ende (27), welches an dem zweiten Ende (18) des Fußes (5) befestigt ist und eine erste Öffnung (28) definiert; und
- in zweites Ende (29), welches frei ist und eine zweite Öffnung (30) definiert, welche in Richtung des ersten Endes (11) des Schaftes (10) gewandt ist,
wobei sich die Membran (26) zwischen ihren beiden Öffnungen (28, 30) wenigstens über einen Teil des durchquerenden Loches (25) hinweg erstreckt.

15. Element nach Anspruch 14, **dadurch gekennzeichnet, dass** die Membran (26) aus einem elastomeren Material hergestellt ist.

16. Element nach Anspruch 14 oder 15, **dadurch gekennzeichnet, dass** die Membran (26) aus dem gleichen Material wie das kompressible Organ (21) ausgebildet ist.

17. Element nach einem der Ansprüche 14 bis 16, **dadurch gekennzeichnet, dass** die Membran in dem Fuß (5) gegegossen ist.

18. Element nach einem der Ansprüche 1 bis 17, **dadurch gekennzeichnet, dass** der Kopf (6) ein zylindrisches Teil ist, welches umfasst:
- eine wenigstens teilweise mit einem Gewinde versehene Bohrung (33);
- ein erstes Ende (20), welches eine erste im Wesentlichen kreisförmige Öffnung (34) definiert und die Anschlagfläche (20) bildet; und
- ein dem ersten Ende (20) entgegengesetztes zweites Ende (36), welches eine zweite, im Wesentlichen kreisförmige Öffnung (37) definiert.

19. Element nach Anspruch 18, **dadurch gekennzeichnet, dass** der Kopf (6) des Weiteren eine nachgiebige elastische Membran (38) umfasst, welche an dem zweiten Ende (36) des Kopfes (6) befestigt ist und einen zerreißbaren Deckel bildet, der die zweite Öffnung (37) verschließt.

20. Element nach Anspruch 19, **dadurch gekennzeichnet, dass** der Deckel (38), welcher kreisförmig ist, in der Umgebung seines Zentrums einen Bereich geringsten Widerstandes (39) aufweist, dessen Eindrücken das Zerreißen des Deckels (38) hervorrufen kann.

21. Element nach Anspruch 19 oder 20, **dadurch gekennzeichnet, dass** der Deckel (38) aus einem elastomeren Material ausgebildet ist.

22. Element nach einem der Ansprüche 19 bis 21, **dadurch gekennzeichnet, dass** der Deckel (38) aus dem gleichen Material wie das kompressible Organ (21) ausgebildet ist.

23. Element nach einem der Ansprüche 19 bis 22, **dadurch gekennzeichnet, dass** der Deckel (38) auf dem Kopf (6) gegossen ist.

24. Element nach einem der Ansprüche 18 bis 23, **dadurch gekennzeichnet, dass** es des Weiteren einen Einsatz (40) aufweist, der in die Bohrung (33) des Kopfes (6) eingesteckt und in dieser befestigt ist, wobei der Einsatz (40) und der Kopf (6) koaxial sind und der Einsatz (40) umfasst:
- einen ringförmigen Teil (41); und
- eine Vielzahl von elastischen Lamellen (42), welche jeweils umfassen:
- einen ersten Bereich (43), welcher axial über den ringförmigen Bereich (41) in Richtung der zweiten Öffnung (37) vorsteht; und
- einen zweiten Bereich (44), der in Richtung auf die erste Öffnung (34) und in Richtung auf die Achse des Einsatzes (40) gekrümmt ist und sich in einem freien Ende verlängert, welches eine Spitze (45) bildet;
wobei die Spitzen (45) gemeinsam einen freien Raum (46) bilden, der die Achse des Einsatzes (40) umgibt.

25. Element nach Anspruch 24, **dadurch gekennzeichnet, dass** der Kopf (6) des Weiteren umfasst:
- von seinem ersten Ende (20) beabstandet wenigstens einen radialen inneren Vorsprung (47, 50);
- mit Abstand von diesem Vorsprung (47, 50) wenigstens einen Anschlag (48, 52);
wobei der Einsatz (40) in dem Kopf (6) eingerastet ist und zwischen dem Vorsprung (47, 50) und dem Anschlag (48, 52) gefangen ist.

26. Element nach Anspruch 25, **dadurch gekennzeichnet, dass** der Kopf (6) einen mit einem Gewinde versehenen Bereich (35) aufweist, der sich zwischen dem ersten Ende (20) und dem Vorsprung (47, 50) erstreckt.

27. Element nach Anspruch 26, **dadurch gekennzeichnet, dass** der mit einem Gewinde versehene Bereich (35) ein unterbrochenes Gewinde aufweist und eine Vielzahl von mit einem Gewinde versehenen Abschnitten, welche von nicht mit einem Gewinde versehenen Abschnitten voneinander getrennt sind, umfasst.

28. Element nach Anspruch 26, **dadurch gekennzeichnet, dass** der mit einem Gewinde versehene Bereich (35) ein Doppelgewinde aufweist und zwei sich überlappende Gewinde umfasst.

29. Element nach einem der Ansprüche 1 bis 28, **dadurch gekennzeichnet, dass** der Kopf (6) eine Reihe von sich axial erstreckenden äußeren Wülsten (51) umfasst.

30. Element nach einem der Ansprüche 19 bis 23, **dadurch gekennzeichnet, dass** der Kopf (6) eine Reihe von sich axial erstreckenden äußeren Wülsten (51) umfasst, wobei diese Wülste (51) mit dem Deckel (38) aus einem Stück ausgebildet sind.

31. Element nach einem der Ansprüche 1 bis 30, **dadurch gekennzeichnet, dass** das elastisch kompressible Organ (21) die Abstützfläche (15) wenigstens teilweise verdeckt.

32. Element nach einem der Ansprüche 1 bis 31, **dadurch gekennzeichnet, dass** es Rastmittel (54) des Kopfes (6) auf dem Fuß (5) umfasst.

33. Element nach Anspruch 32, **dadurch gekennzeichnet, dass** die Rastmittel (54) einerseits Zähne (55) umfassen, welche zu dem Kopf (6) gehören, und andererseits Haken (56), welche zu dem Fuß (5) gehören, wobei die Haken (56) geeignet sind, mit den Zähnen (55) zusammenzuwirken.

34. Vorrichtung zum Einführen eines Kabels zum Queren einer Wand (2) mit einem Kabel (4) durch eine in der Wand (2) ausgebildete Durchtrittsöffnung (3), wobei die Vorrichtung (1) **dadurch gekennzeichnet ist, dass** sie in Form eines Elements nach einem der Ansprüche 1 bis 33 vorliegt, wobei der Fuß (5) und der Kopf (6) hohl sind, um zu erlauben, dass sie von dem Kabel (4) durchquert werden.

## Claims

1. A device adapted to be fixed to a wall (2) blindly and including:
- a threaded base (5) which is pushed through a hole (3) formed through said wall (2), said base (5) including:
- a shank (10) having opposite first and second free ends (11, 18); and
- flexible teeth (12) which adopt a rest position in which they project radially from the shank when no force is applied to them and can retract elastically from this rest position, said teeth (12) having a radial bearing surface (15) facing away from said free end (11); and
- a head (6) adapted to be screwed onto the base (5), said head (6) having an abutment surface (20) which faces toward the bearing surface (15) of said teeth (12) when the head (6) is screwed onto the base (5),
said device (1) being **characterized in that** it further includes an elastically compressible member (21) adapted to be compressed by a radial force, fixed to and covering at least part of said shank (10) in the vicinity of the teeth (12) at the end opposite the free end (11) of the shank (10).

2. A device according to claim 1, **characterized in that** said compressible member (21) takes the form of an annular bead surrounding the shank (10).

3. A device according to claim 1 or claim 2, **characterized in that** said compressible member (21) is molded around the shank (10).

4. A device according to any of claims 1 to 3, **characterized in that** said member (21) is made of an elastomer material.

5. A device according to any of claims 1 to 4, **characterized in that** it further includes a second compressible member (22) extending radially around said shank (10) and including:
- a first bearing surface (23) which faces the abutment surface (20) of the head (6) when the head (6) is screwed onto the base (5); and
- a second bearing surface (24) which faces the bearing surface (15) of the teeth (12).

6. A device according to claim 5, **characterized in that** the first and second compressible members (21, 22) form a one-piece assembly.

7. A device according to claim 6, **characterized in that** the second compressible member (22) takes the form of a flange in one piece with the first compressible member (21), said flange (22) being situated at a distance from the teeth (12) so that a free space is formed between the second bearing surface (24) of the flange (22) and the bearing surfaces (15) of the teeth (12).

8. A device according to claim 7, **characterized in that** said one-piece assembly has a section in the shape of an angle-iron.

9. A device according to claim 5, **characterized in that** the second compressible member (22) takes the form of a washer (22') adapted to be threaded over the shank (10).

10. A device according to any of claims 1 to 9, **characterized in that** the base (5) includes a shoulder (17) situated at a distance from the teeth (12) at the end opposite the first free end (11), said shoulder (17) forming a radial abutment surface that faces the bearing surfaces (15) of the teeth (12) so that a space is formed between the teeth (12) and said shoulder (17).

11. A device according to claim 10, **characterized in that** the first compressible member (21) is situated in the space formed between said teeth (12) and said shoulder (17).

12. A device according to claim 10 or claim 11, **characterized in that** the base (5) has a threaded portion (16) extending from said shoulder (17) toward the second free end (18).

13. A device according to any of claims 1 to 12, **characterized in that** the base (5) is hollow and has a substantially cylindrical hole (25) through it extending from one end (11) to the other (18).

14. A device according to claim 13, **characterized in that** it further includes a frustoconical elastic flexible membrane (26) having:
- a first end (27) fixed to the second end (18) of the base (5) and defining a first mouth (28); and
- a second free end (29) defining a second mouth (30) facing toward the first end (11) of the shank (10),
said membrane (26) extending, between its two mouths (28, 30), across at least a portion of said hole (25).

15. A device according to claim 14, **characterized in that** said membrane (26) is made of an elastomer material.

16. A device according to claim 14 or claim 15, **characterized in that** said membrane (26) is made of the same material as said compressible member (21).

17. A device according to any of claims 14 to 16, **characterized in that** said membrane (26) is molded into the base (5).

18. A device according to any of claims 1 to 17, **characterized in that** the head (6) is a cylindrical component including:
- a bore (33) which is at least partly threaded;
- a first end (20) defining a first substantially circular opening (34) and forming said abutment surface (20); and
- a second end (36) opposite the first end (20) and defining a second substantially circular opening (37).

19. A device according to claim 18, **characterized in that** the head (6) further includes an elastic flexible membrane (38) fixed to the second end (36) of the head (6) and forming a readily torn film blocking the second opening (37).

20. A device according to claim 19, **characterized in that** said film (38) is circular and has in the vicinity of its center a weaker area (39) which can be depressed to cause the film (38) to start to tear.

21. A device according to claim 19 or claim 20, **characterized in that** said film (38) is made of an elastomer material.

22. A device according to any of claims 19 to 21, **characterized in that** said film (38) is made of the same material as said compressible member (21).

23. A device according to any of claims 19 to 22, **characterized in that** said film (38) is molded onto the head (6).

24. A device according to any of claims 18 to 23, **characterized in that** it further includes an insert (40) which is inserted and fixed into the bore (33) in the head (6), said insert (40) and the head (6) being coaxial and said insert (40) including:
- an annular portion (41); and
- a plurality of elastic blades (42) each including:
- a first portion (43) projecting axially from said annular portion (41) toward the second opening (37); and
- a second portion (44) curved toward the first opening (34) and toward the axis of the insert (40) and extended by a free end forming a point (45);
the points (45) together defining a free space (46) around the axis of the insert (40).

25. A device according to claim 24, **characterized in that** the head (6) further includes:
- at least one inside radial projection (47, 50) at a distance from its first end (20); and
- at least one abutment (48, 52) at a distance from said projection (47, 50);
said insert (40) being clipped into the head (6) and trapped between said projection (47, 50) and said abutment (48, 52).

26. A device according to claim 25, **characterized in that** the head (6) has a threaded portion (35) extending between the first end (20) and said projection (47, 50).

27. A device according to claim 26, **characterized in that** said threaded portion (35) has an interrupted thread and includes a plurality of threaded sectors separated by sectors that are not threaded.

28. A device according to claim 26, **characterized in that** said threaded portion (35) has a double thread and includes two interleaved threads.

29. A device according to any of claims 1 to 28, **characterized in that** the head (6) includes a series of exterior beads (51) extending in the axial direction.

30. A device according to any of claims 19 to 23, **characterized in that** the head (6) includes a series of exterior beads (51) extending in the axial direction, said beads (51) being in one piece with said film (38).

31. A device according to any of claims 1 to 30, **characterized in that** the elastically compressible member (21) covers at least part of said bearing surface (15).

32. A device according to any of claims 1 to 31, **characterized in that** it includes means for clipping (54) the head (6) to the base (5).

33. A device according to claim 32, **characterized in that** said clipping means (54) include, on the one hand, teeth (55) belonging to the head (6) and, on the other hand, claws (56) belonging to the base (5), said claws (56) being adapted to cooperate with said teeth (55).

34. A cable entry device for passing a cable (4) through a wall (2) by means of a hole (3) formed through said wall (2), said device (1) being **characterized in that** it takes the form of a device according to any of claims 1 to 33, the base (5) and the head (6) being hollow to enable the cable (4) to pass through them.
